# FASCICULE DE BREVET EUROPEEN

(11) **EP 3 185 335 B1**
(45) Date de publication et mention de la délivrance du brevet: **05.02.2020**
(21) Numéro de dépôt: 15201690.3
(22) Date de dépôt: 21.12.2015
(51) Int. Cl.: H01M 2/08

(54) **BATTERIE**
BATTERIE
BATTERY

(43) Date de publication de la demande: 28.06.2017
(73) Titulaire: The Swatch Group Research and Development Ltd., 2074 Marin (CH)
(72) Inventeur: Stalder, Michael, 2564 Bellmund (CH); Reinauer, Olga, 2000 Neuchâtel (CH); Züllig, Frédy, 2800 Delémont (CH)
(74) Mandataire: ICB SA

(56) Documents cités:
- FR-A1- 3 006 116
- JP-A- 2002 280 059
- JP-A- 2015 220 024
- US-A- 5 102 753
- US-A1- 2004 253 512
- US-A1- 2013 133 185
- US-A1- 2014 162 116
- R.J. ARENZ: "Nonlinear Shear Behavior of Poly(vinyl acetate) Material", MECHANICS OF TIME-DEPENDENT MATERIALS, vol. 2, no. 4, 1 janvier 1998 (1998-01-01) , pages 287-305, XP055275491, Dordrecht ISSN: 1385-2000, DOI: 10.1023/A:1009827310712
- Anonymous: "The Selection", , 5 May 2018 (2018-05-05), XP055474348, Retrieved from the Internet: URL:http://www.grantadesign.com/education/ InDepth/html/indepth/materialcasestudies/c es341e.htm [retrieved on 2018-05-11]

## Description

### Domaine de l'invention

L'invention concerne une batterie comprenant au moins un collecteur de courant cathodique, une cathode, un séparateur, un électrolyte, une anode et un collecteur de courant anodique, la cathode étant disposée entre le collecteur de courant cathodique et le séparateur, et l'anode étant disposée entre le séparateur et le collecteur de courant anodique, la batterie comprenant en outre un joint d'étanchéité disposé sur le pourtour de la cathode, de l'anode et du séparateur et reliant le bord périphérique intérieur du collecteur de courant cathodique au bord périphérique intérieur du collecteur de courant anodique.

### Arrière-plan de l'invention

De telles batteries sont par exemple décrites dans le brevet EP 1202372. Elles se présentent de préférence sous la forme d'un film mince. Pour pouvoir utiliser ces batteries dans des environnements imposant des contraintes mécaniques importantes, par exemple des bracelets de montre, des textiles, etc., il est nécessaire de développer des batteries très flexibles. Des batteries flexibles sont décrites dans les documents US2014/162116 et US5102753. Les batteries disponibles sur le marché ne sont pas suffisamment flexibles de sorte que leur utilisation dans des environnements imposant des contraintes mécaniques importantes entraine rapidement la rupture de l'un des éléments de la batterie. En effet, des fissures apparaissent dans le matériau d'encapsulation par exemple après plusieurs flexions conduisant à la détérioration de la batterie. Ont été également développées des batteries dans lesquelles les collecteurs de courant se trouvant en général aux extrémités de la batterie sont utilisés pour l'encapsulation. C'est de ce fait l'élément qui subit le stress de courbure le plus élevé, c'est-à-dire un stress en traction au rayon de courbure le plus élevé (extérieur), ainsi qu'en compression au rayon de courbure le plus faible, à l'intérieur. En conséquence, des fissures apparaissent dans les collecteurs de courant après une centaine de flexions à des rayons de courbure inférieurs à environ 1.5 cm. Ces fissures s'accentuent avec un nombre croissant de flexions et forment des plis qui détériorent les couches actives à l'intérieur de la batterie. Ceci se traduit par une baisse de capacité qui s'accentue de plus en plus et se termine par la destruction de la batterie.

Par ailleurs, parallèlement à sa flexibilité, une batterie doit également présenter d'excellentes propriétés de barrière aux gaz. En effet, les matériaux électroactifs des batteries Lithium-ion par exemple sont très sensibles à l'humidité.

### Résumé de l'invention

L'invention a notamment pour objectif de pallier les différents inconvénients des batteries connues qui présentent une flexibilité insuffisante.

Plus précisément, un objectif de l'invention est de fournir une batterie permettant une utilisation dans des environnements imposant des contraintes mécaniques importantes.

Un autre objectif de l'invention est de fournir une batterie permettant de trouver un compromis entre sa flexibilité et ses propriétés de barrière aux gaz.

A cet effet, la présente invention concerne une batterie comprenant au moins un collecteur de courant cathodique, une cathode, un séparateur, un électrolyte, une anode et un collecteur de courant anodique, la cathode étant disposée entre le collecteur de courant cathodique et le séparateur, et l'anode étant disposée entre le séparateur et le collecteur de courant anodique, la batterie comprenant en outre un joint d'étanchéité disposé sur le pourtour de la cathode, de l'anode et du séparateur et reliant le bord périphérique intérieur du collecteur de courant cathodique au bord périphérique intérieur du collecteur de courant anodique.

Selon l'invention, ledit joint d'étanchéité est réalisé au moins en partie en un matériau élastomère viscoélastique présentant un module de Young compris entre 500 Pa et 100 kPa et un module de cisaillement compris entre 250 Pa et 100 kPa, ces valeurs étant mesurées pour le module de Young et le module de cisaillement en début de contrainte à 0-2% et 0-1% respectivement, et en traction à 10 mm/min et 2 mm/min respectivement, ledit matériau élastomère viscoélastique étant une mousse ayant une masse volumique comprise entre 500 et 900 kg/m³.

De préférence, l'électrolyte peut se présenter sous la forme d'un sel en solution aqueuse, de sorte que le fonctionnement de la batterie se base sur une chimie aqueuse.

Une batterie selon l'invention présente une flexibilité très importante, supérieure à la flexibilité des batteries commerciales, tout en étant peu sensible aux gaz, et plus spécialement à l'humidité de l'air.

### Description sommaire des dessins

D'autres caractéristiques et avantages de l'invention apparaîtront plus clairement à la lecture de la description suivante d'un mode de réalisation de l'invention, donné à titre de simple exemple illustratif et non limitatif, et des figures annexées, parmi lesquelles :
- la figure 1 représente une vue en coupe d'une batterie selon l'invention,
- la figure 2 représente la capacité de la batterie obtenue en fonction du nombre de cycles jusqu'à 40 cycles, et
- la figure 3 représente la capacité de la batterie obtenue en fonction du nombre de cycles jusqu'à 140 cycles.

### Description détaillée d'un mode de réalisation préféré

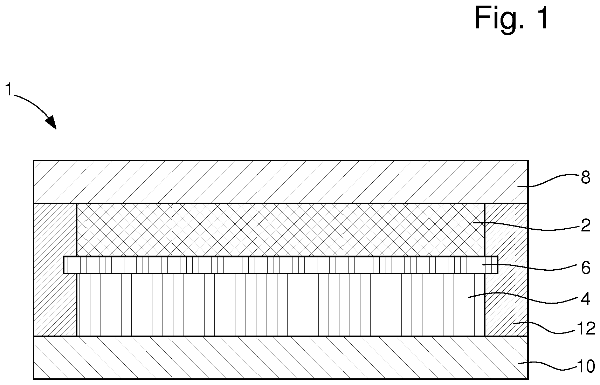

En référence à la figure 1, il est représenté une batterie 1 selon l'invention. Cette batterie peut être rechargeable ou non rechargeable. Le terme « batterie » utilisé dans la présente description désigne aussi bien une batterie qu'une pile ou un accumulateur.

La batterie 1 comprend une cathode 2 et une anode 4 séparées entre elles par un séparateur 6. La batterie 1 comprend en outre deux collecteurs de courant, à savoir un collecteur de courant cathodique 8 et un collecteur de courant anodique 10. La cathode 2 est disposée entre le collecteur de courant cathodique 8 et le séparateur 6, et l'anode 4 est disposée entre le séparateur 6 et le collecteur de courant anodique 10.

Le séparateur 6 est généralement réalisé en polymères ou composites.

Les collecteurs de courant cathodique 8 et anodique 10 peuvent être réalisés en acier inoxydable par exemple ou en un matériau métallique au moins partiellement amorphe, lorsqu'une flexibilité extrême est requise. De tels collecteurs de courant en métal amorphe sont décrits par exemple dans le brevet EP 2795702.

La batterie 1 comprend en outre un électrolyte pour l'échange d'ions entre la cathode 2 et l'anode 4.

En outre, la batterie comprend un joint d'étanchéité 12, non électro-conducteur, et disposé sur le pourtour de la cathode 2, de l'anode 4 et du séparateur 6 pour former un cadre autour de ces éléments. Le joint d'étanchéité 12 est disposé entre le collecteur de courant cathodique 8 et le collecteur de courant anodique 10 de manière à relier le bord périphérique intérieur du collecteur de courant cathodique 8 au bord périphérique intérieur du collecteur de courant anodique 10. Ainsi, le joint d'étanchéité 12 et les collecteurs de courant 8 et 10 forment le dispositif d'encapsulation de la batterie 1.

L'épaisseur du joint d'étanchéité 12 correspond à l'épaisseur de la cathode, du séparateur et de l'anode. Typiquement, la batterie 1 présente une épaisseur totale d'environ 0.4 mm, les collecteurs de courant 8 et 10 ayant une épaisseur pouvant varier de 1 µm à 50 µm. Préférentiellement, l'épaisseur sera comprise entre 5 µm et 30 µm.

Selon l'invention, le joint d'étanchéité 12 est réalisé au moins en partie en un matériau élastomère viscoélastique. Avantageusement, un tel matériau élastomère viscoélastique n'est pas vulcanisé ou réticulé selon un autre procédé aux effets comparables. Notamment, il n'a pas subi de vulcanisation au soufre. Un tel matériau élastomère viscoélastique présente un module de Young compris entre 500 Pa et 100 kPa et un module de cisaillement compris entre 250 Pa et 100 kPa. De préférence, l'ensemble du joint d'étanchéité est réalisé dans ce matériau élastomère viscoélastique.

Du fait de la viscoélasticité du matériau utilisé dans l'invention, ces valeurs sont mesurées pour le module de Young et le module de cisaillement en début de contrainte, à 0-2% et 0-1% respectivement, et en traction à 10 mm/min et 2 mm/min respectivement.

De préférence, le matériau élastomère viscoélastique utilisé dans l'invention présente une résistance à la traction supérieure à 50 N/cm² (ASTM D-897, après 72h, 50mm/min, 6.45cm², 25°C) et une résistance au cisaillement dynamique supérieure à 50 N/cm² (ASTM D-1002, après 72h, 12.7mm/min, 6.45cm², 25°C).

Les valeurs du module de Young et du module de cisaillement seront adaptées à l'application recherchée. Notamment, on choisira les valeurs basses des intervalles indiqués pour des applications nécessitant une très grande flexibilité, telle que les bracelets de montre. Dans ce cas, le matériau élastomère peut présenter un module de Young compris entre 500 Pa et 3 kPa et un module de cisaillement compris entre 250 Pa et 3 kPa. Des valeurs hautes des intervalles indiqués peuvent être utilisées dans des applications nécessitant une plus faible flexibilité, telles que les cartes de crédit.

Le matériau élastomère utilisé dans l'invention est une mousse ayant une masse volumique comprise entre 500 et 900 kg/m³, et de préférence entre 600 et 800 kg/m³.

Le joint d'étanchéité peut être assemblé aux bords périphériques intérieurs des collecteurs de courant cathodique 8 et anodique 10 par collage par exemple, la colle étant adaptée pour ne pas nuire à la flexibilité apportée par le matériau élastomère.

D'une manière particulièrement avantageuse, le matériau élastomère utilisé dans l'invention est un adhésif sensible à la pression (pressure-sensitive adhesive) ou autocollant. Cela permet une encapsulation simple, sure et rapide de la batterie. Un tel matériau est également auto-cicatrisant.

De préférence, le matériau élastomère viscoélastique utilisé dans l'invention est choisi parmi le groupe comprenant les acryliques, les caoutchoucs naturels, les caoutchoucs butyliques, les caoutchoucs silicones, les éthylène-vinyle acétates (EVA), les nitriles, les copolymères blocs de styrène (SBC), (tels que les styrène-butadiène-styrène (SBS), les styrène-éthylène/butylène-styrène (SEBS), les styrène-éthylène/propylène (SEP), et les styrène-isoprène-styrène (SIS)), et les vinyle éthers.

De préférence, le matériau élastomère viscoélastique utilisé dans l'invention est une mousse acrylique autocollante.

Par ailleurs, le matériau élastomère viscoélastique utilisé dans l'invention est choisi de telle manière que la force d'adhésion entre ledit matériau élastomère viscoélastique et les collecteurs de courant cathodique et anodique soit supérieure aux forces de cohésion dudit matériau élastomère viscoélastique.

Il est également possible d'améliorer l'adhésion du matériau élastomère viscoélastique aux bords périphériques intérieurs des collecteurs de courant cathodique 8 et anodique 10 en activant la surface intérieure de l'un ou l'autre des collecteurs de courant. Les techniques connues de dégraissage, abrasion pour rendre la surface rugueuse, traitements plasma/corona, dépôts de primaires d'adhésion, peuvent être utilisées.
Le matériau élastomère viscoélastique est idéalement appliqué par un procédé « roll to roll », qui permet d'aligner précisément les différents éléments, d'enlever facilement les films de protection et finalement d'appliquer la pression nécessaire à l'adhésion des couches.

Le matériau élastomère viscoélastique utilisé dans l'invention permet d'absorber les contraintes en traction et en compression, de sorte que les deux collecteurs de courant cathodique et anodique peuvent cisailler. De plus, la contrainte de cisaillement est transformée en traction/compression normale, conduisant au gondolement du joint, ce qui permet de pratiquement éliminer la dépendance de cette contrainte de la longueur de la batterie. Cela permet de réaliser des batteries beaucoup plus longues que le rayon de courbure.

Ainsi, la batterie selon l'invention permet d'atteindre au moins 5'000 flexions avec une rayon de courbure de 1 cm en utilisant deux collecteurs de courant en métal totalement amorphe d'une épaisseur de 25 micromètres dans une pile d'une épaisseur totale de 0.4 mm, sans endommagement de cette dernière. Parmi les piles en film disponibles sur le marché actuellement, aucune ne survit à 150 flexions avec un rayon de courbure de 1 cm.

Les éléments de la batterie de l'invention peuvent être choisis pour fonctionner avec un électrolyte en solvant non aqueux ou un électrolyte solide. De telles chimies sont traditionnellement utilisées dans les batteries et sont connues de l'homme du métier.

Toutefois, d'une manière particulièrement préférée et avantageuse, l'électrolyte utilisé dans la batterie selon l'invention se présente sous la forme d'un sel en solution aqueuse, de sorte que le fonctionnement de la batterie se base sur une chimie aqueuse.

Dans ce cas, l'anode et la cathode comprennent avantageusement un matériau électroactif dont la différence de potentiel se situe à l'intérieur de la fenêtre de stabilité de l'eau. Ainsi, il n'y aura ni oxydation ni réduction de l'eau pour former de l'oxygène ou de l'hydrogène, qui entrainerait une détérioration rapide de la batterie. La tension entre l'anode et la cathode se situe donc typiquement aux alentours de 1.5 V.

Par exemple, les éléments de la batterie sont tels que la batterie est du type Ni-MH à électrolyte aqueux, ou du type Lithium-ion en milieu aqueux, par exemple (-)LISICON/LiNO₃/LiMn₂O₄(+).

L'électrolyte peut également contenir des additifs qui augmentent sa stabilité électrochimique.

D'une manière avantageuse, l'électrolyte peut être injecté à travers le joint en matériau élastomère pour mouiller tous les éléments de la batterie. Le matériau étant auto-cicatrisant, le joint se referme après l'injection.

D'une manière avantageuse, la concentration en sel électrolyte est choisie de telle manière que la pression de vapeur saturante de l'électrolyte soit égale à la pression de vapeur moyenne de l'air (humidité relative) dans lequel se trouve la batterie à ±20%, de préférence ± 10% dans des conditions normales d'utilisation. Ainsi, si l'air ambiant devient plus sec que les conditions normales d'utilisation, de l'eau s'évapore de la batterie ce qui a pour effet de concentrer l'électrolyte et de déplacer l'humidité relative à l'équilibre vers une valeur inférieure. Si l'air ambiant devient plus humide que les conditions normales d'utilisation, la batterie absorbe de l'eau, ce qui a pour effet de diluer l'électrolyte et d'augmenter l'humidité relative à l'équilibre. Ces changements sont réversibles, ce qui garantit une longue durée de vie.

Ainsi, contrairement à une batterie non-aqueuse pour laquelle toute absorption d'eau est néfaste, la batterie aqueuse selon l'invention peut être optimisée en choisissant la concentration en sel électrolyte pour s'adapter aux différentes conditions de l'air ambiant. De plus, le joint élastomère utilisé dans l'invention permet, parallèlement à l'obtention d'une très grande flexibilité, d'absorber le changement de volume de la batterie, et garantit ainsi son bon fonctionnement, indépendamment des conditions d'humidité.

La batterie selon l'invention peut être utilisée pour différentes applications comme par exemple une application horlogère ou une application dans une carte à puce ou dans la téléphonie.

L'exemple suivant illustre la présente invention sans toutefois en limiter la portée.

Les matériaux actifs sont synthétisés d'après les publications suivantes :
- Anode LiTi₂(PO₄)₃ : C. Wessells et al., J. Electrochem. Soc., Vol.158 (3), p. A352 (2011)
- Cathode LiMn₂O₄ : W. Liu et al., J. Electrochem. Soc., Vol.143 (3), p.879 (1996), mais en remplaçant 7.5 mol% de nitrate de manganèse(II) par du nitrate de chrome (III).

### Préparation des électrodes :

Anode : un composite est formé en broyant le LiTi₂(PO₄)₃ avec du noir de carbone (Super P) avec la proportion 1 : 1 dans un moulin à bille planétaire à 300 rpm pendant 3h (billes en agate diamètre 20 mm). Ensuite on broie dans un mortier en agate avec 8% PVDF (Kynar) et 4% de graphite (Timrex MX15), puis on ajoute du NMP et on broie jusqu'à dissolution du PVDF et l'obtention d'une dispersion homogène (env. 50% de solide).

Cathode : on broie le LiCr_{0.15}Mn_{1.85}O₄ dans un mortier en agate avec 8% PVDF (Kynar) et 4% de graphite (Timrex MX15), puis on ajoute du NMP et on broie jusqu'à dissolution du PVDF et l'obtention d'une dispersion homogène (env. 50% de solide).

Les collecteurs de courant anodique et cathodique sont des feuilles en acier inox 316L, d'épaisseur 0.028 mm, dégraissées à l'isopropanol et abrasées de manière à rendre la surface rugueuse et améliorer l'adhésion. Puis ils sont masqués avec de la bande de masquage (p.ex. Nitto PS-2) à l'endroit où viendra le joint d'étanchéité (p.ex. une bordure de 5 mm autour de l'électrode), puis recouverts des dispersions précédentes à l'aide d'une barre et de cales ayant l'épaisseur voulue, p.ex. 0.2 mm.

Les électrodes sont séchées à température ambiante pendant 12 h, ensuite laminées avec une pression de 100 N/mm.

### Assemblage des cellules :

Une bande d'un ruban élastomère viscoélastique adhésif VHB™ commercialisé par 3M™, doté d'une couche centrale en mousse acrylique à cellules fermées, présentant un module de Young d'environ 2500 Pa et un module de cisaillement d'environ 300 Pa, mesurés selon les indications données ci-dessus, et d'épaisseur de 0.4 mm, est découpée aux dimensions voulues du joint (p.ex. un cadre rectangulaire aux dimensions extérieures 50mmx25mm et aux dimension intérieures 40mmx15mm).

Ce cadre est collé sur le collecteur de courant de la cathode à l'endroit qui était masqué.

Un séparateur en microfibres de verre (Whatman GF/D) est imbibé d'électrolyte : une solution aqueuse de Li₂SO₄ 2M contenant également 1% de carbonate de vinylène.

L'anode est positionnée par-dessus, à nouveau de façon à ce que le cadre formant le joint d'étanchéité se colle sur le collecteur en acier à l'endroit qui était masqué.

On applique une pression de 20 N/cm² pour que le joint d'étanchéité colle bien à l'acier.

Après un jour de stockage, on complète le volume d'électrolyte à 15 microlitre/cm² en l'injectant à travers le joint avec une seringue dont l'aiguille a un diamètre externe d'env. 0.2mm (p.ex. Hamilton HA-7750-22).

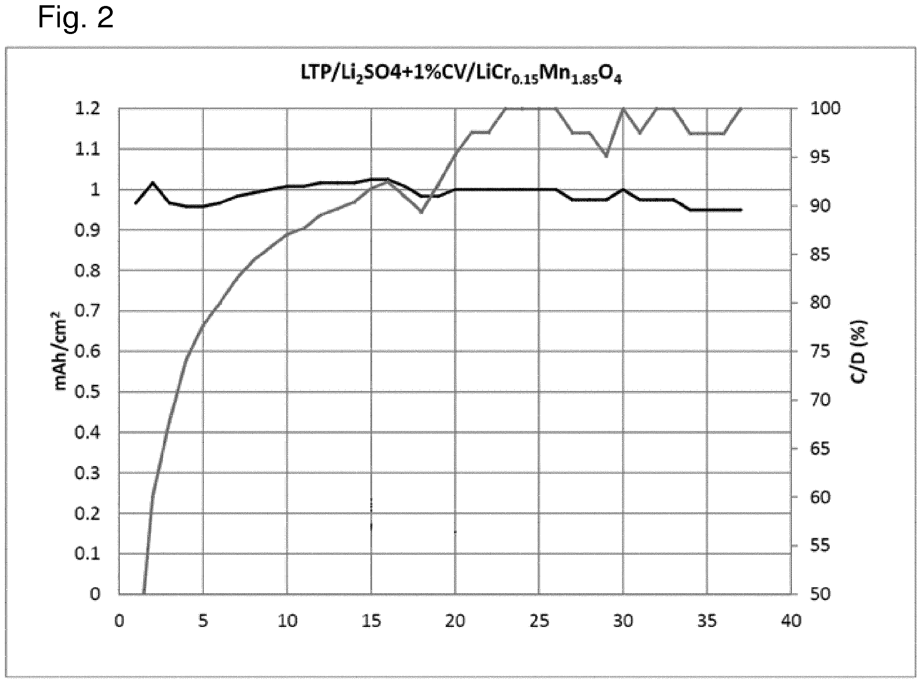

La figure 2 représente les capacités de la batterie obtenues en fonction du nombre de cycles, avec un taux de décharge de 1 mA pour les cycles 1 à 19 puis de 3 mA à partir du cycle 20.

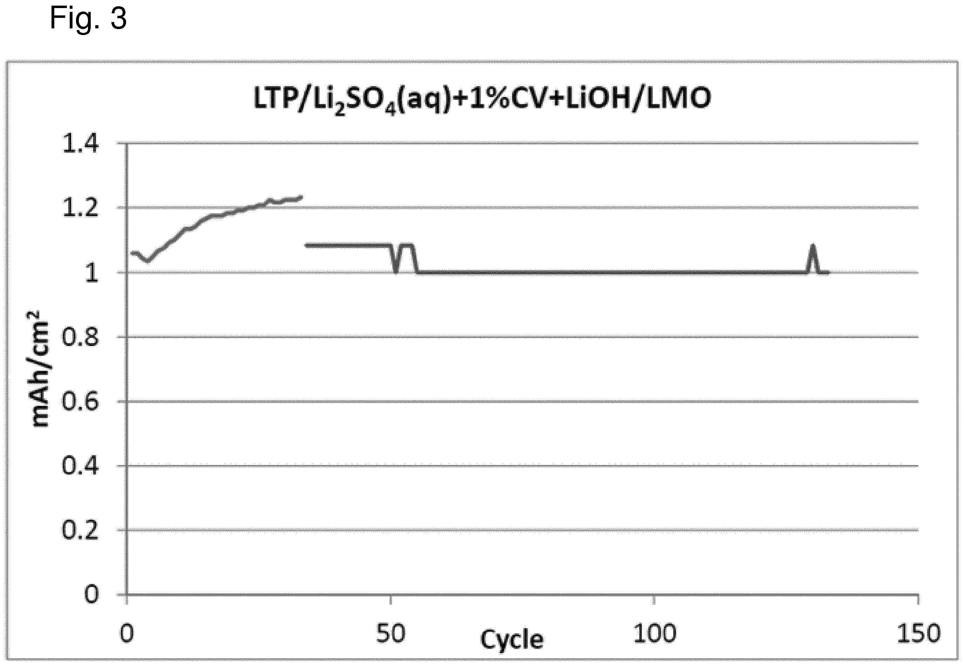

La figure 3 représente 40 décharges à C/2 (première partie de courbe à gauche) suivies de 100 décharges à 5C (deuxième partie de courbe à droite), démontrant l'excellente stabilité de la batterie obtenue au-delà de 100 cycles.

### Test de flexions :

La batterie obtenue selon l'invention est placée en sandwich entre deux films PET. Une extrémité de chaque film est fixée sur un cylindre, dont le diamètre correspond à 2 fois le rayon de courbure désiré. L'autre extrémité est fixée à un contrepoids de 500g, suffisamment lourd pour fléchir la batterie, c'est-à-dire pour la plaquer contre le cylindre.

La batterie est alors enroulée un certain nombre de fois autour du cylindre. En changeant le sens de la rotation après chaque flexion, on peut alterner des flexions convexes à des flexions concaves.

La batterie selon l'invention permet d'atteindre 5000 flexions alternées avec une fréquence de 0.1Hz, avec un rayon de courbure de 1 cm sans endommagement.

## Revendications

1. Batterie en film mince flexible (1) comprenant au moins un collecteur de courant cathodique (8), une cathode (2), un séparateur (6), un électrolyte, une anode (4) et un collecteur de courant anodique (10), la cathode (2) étant disposée entre le collecteur de courant cathodique (8) et le séparateur (6), et l'anode (4) étant disposée entre le séparateur (6) et le collecteur de courant anodique (10), la batterie (1) comprenant en outre un joint d'étanchéité (12) disposé sur le pourtour de la cathode (2), de l'anode (4) et du séparateur (6) et reliant le bord périphérique intérieur du collecteur de courant cathodique (8) au bord périphérique intérieur du collecteur de courant anodique (10), **caractérisée en ce que** ledit joint d'étanchéité (12) est réalisé au moins en partie en un matériau élastomère viscoélastique présentant un module de Young compris entre 500 Pa et 100 kPa et un module de cisaillement compris entre 250 Pa et 100 kPa, ces valeurs étant mesurées pour le module de Young et le module de cisaillement en début de contrainte à 0-2% et 0-1% respectivement, et en traction à 10 mm/min et 2 mm/min respectivement, ledit matériau élastomère viscoélastique étant une mousse ayant une masse volumique comprise entre 500 et 900 kg/m³.

2. Batterie (1) selon la revendication 1, **caractérisée en ce que** le matériau élastomère viscoélastique présente un module de Young compris entre 500 Pa et 3 kPa et un module de cisaillement compris entre 250 Pa et 3 kPa, ces valeurs étant mesurées pour le module de Young et le module de cisaillement en début de contrainte à 0-2% et 0-1% respectivement, et en traction à 10 mm/min et 2 mm/min respectivement.

3. Batterie (1) selon l'une des revendications 1 ou 2, **caractérisée en ce que** le matériau élastomère viscoélastique est une mousse ayant une masse volumique comprise entre 600 et 800 kg/m³.

4. Batterie (1) selon l'une des revendications précédentes, **caractérisée en ce que** le matériau élastomère viscoélastique est un adhésif sensible à la pression.

5. Batterie (1) selon l'une des revendications précédentes, **caractérisée en ce que** le matériau élastomère viscoélastique est choisi parmi le groupe comprenant les acryliques, les caoutchoucs naturels, les caoutchoucs butyliques, les caoutchoucs silicones, les éthylène-vinyle acétates (EVA), les nitriles, les copolymères blocs de styrène (SBC), et les vinyle éthers.

6. Batterie (1) selon l'une des revendications précédentes, **caractérisée en ce que** les collecteurs de courant cathodique (8) et anodique (10) sont réalisés en un matériau métallique au moins partiellement amorphe.

7. Batterie (1) selon l'une des revendications précédentes, **caractérisée en ce que** l'électrolyte se présente sous la forme d'un sel en solution aqueuse.

8. Batterie (1) selon la revendication 7, **caractérisée en ce que** la cathode (2) et l'anode (4) comprennent un matériau électroactif dont la différence de potentiel se situe à l'intérieur de la fenêtre de stabilité de l'eau.

## Patentansprüche

1. Flexible Dünnschicht-Batterie (1) mit mindestens einem Kathoden-Stromsammler (8), einer Kathode (2), einem Isolator (6), einem Elektrolyten, einer Anode (4) und einem Anoden-Stromsammler (10), wobei die Kathode (2) zwischen dem Kathoden-Stromsammler (8) und dem Isolator (6) angeordnet ist und die Anode (4) zwischen dem Isolator (6) und dem Anoden-Stromsammler (10) angeordnet ist, wobei die Batterie (1) ferner eine Dichtung (12) aufweist, die am Umfang der Kathode (2), der Anode (4) und des Isolators (6) angeordnet ist und den inneren Umfangsrand des Kathoden-Stromsammlers (8) mit dem inneren Umfangsrand des Anoden-Stromsammlers (10) verbindet, **dadurch gekennzeichnet, dass** die Dichtung (12) mindestens teilweise aus einem viskoelastischen Elastomermaterial hergestellt ist, das ein Elastizitätsmodul von 500 Pa bis 100 kPa und ein Schubmodul von 250 Pa bis 100 kPa aufweist, wobei diese Werte für das Elastizitätsmodul und das Schubmodul zu Beginn der mechanischen Spannung mit 0-2 % bzw. 0-1 % und bei einem Zug von 10 mm/Min bzw. 2 mm/Min gemessen werden, wobei das viskoelastische Elastomermaterial ein Schaumstoff ist, der eine Volumenmasse von 500 bis 900 kg/m³ aufweist.

2. Batterie (1) nach Anspruch 1, **dadurch gekennzeichnet, dass** das viskoelastische Elastomermaterial ein Elastizitätsmodul von 500 Pa bis 3 kPa und ein Schubmodul von 250 Pa bis 3 kPa aufweist, wobei diese Werte für das Elastizitätsmodul und das Schubmodul zu Beginn der mechanischen Spannung mit 0-2 % bzw. 0-1 % und bei einem Zug von 10 mm/Min bzw. 2 mm/Min gemessen werden.

3. Batterie (1) nach einem der Ansprüche 1 oder 2, **dadurch gekennzeichnet, dass** das viskoelastische Elastomermaterial ein Schaumstoff ist, der eine Volumenmasse von 600 bis 800 kg/m³ aufweist.

4. Batterie (1) nach einem der vorhergehenden Ansprüche, **dadurch gekennzeichnet, dass** das viskoelastische Elastomermaterial ein druckempfindlicher Klebstoff ist.

5. Batterie (1) nach einem der vorhergehenden Ansprüche, **dadurch gekennzeichnet, dass** das viskoelastische Elastomermaterial aus der Gruppe ausgewählt ist, die Acryle, Naturkautschuk, Butylkautschuk, Silikonkautschuk, Ethylen- Vinyl-Acetat (EVA), Nitrile, Styrol-Blockcopolymere (SBC) und Vinylether enthält.

6. Batterie (1) nach einem der vorhergehenden Ansprüche, **dadurch gekennzeichnet, dass** der Kathoden-Stromsammler (8) und der Anoden-Stromsammler (10) aus einem mindestens teilweise amorphen Metallmaterial hergestellt sind.

7. Batterie (1) nach einem der vorhergehenden Ansprüche, **dadurch gekennzeichnet, dass** der Elektrolyt die Form eines Salzes in wässriger Lösung aufweist.

8. Batterie (1) nach Anspruch 7, **dadurch gekennzeichnet, dass** die Kathode (2) und die Anode (4) ein elektroaktives Material enthalten, dessen Potenzialdifferenz innerhalb des Stabilitätsfensters von Wasser liegt.

## Claims

1. Battery (1) forming a thin flexible film comprising at least a cathode current collector (8), a cathode (2), a separator (6), an electrolyte, an anode and an anode current collector (10), the cathode (2) being disposed between the cathode current collector (8) and the separator (6), and the anode (4) being disposed between the separator (6) and the anode current collector (10), the battery (1) further comprising a sealing gasket (12) disposed on the periphery of the cathode (2), of the anode (4) and of the separator (6) and connecting the inner peripheral edge of the cathode current collector (8) to the inner peripheral edge of the anode current collector (10), **characterized in that** said sealing gasket (12) is at least partially made of a viscoelastic elastomeric material having a Young's modulus comprised between 500 Pa and 100 kPa and a shear modulus comprised between 250 Pa and 100 kPa, these values being measured for the Young's modulus and the shear modulus at the start of stress at 0-2% and 0-1% respectively, and in traction at 10 mm/min and 2 mm/min respectively, said viscoelastic elastomeric material being a foam having a density comprised between 500 and 900 kg/m³.

2. Battery (1) according to claim 1, **characterized in that** the viscoelastic elastomeric material has a Young's modulus comprised between 500 Pa and 3 kPa and a shear modulus comprised between 250 Pa and 3 kPa, these values being measured for the Young's modulus and the shear modulus at the start of stress at 0-2% and 0-1% respectively, and in traction at 10 mm/min and 2 mm/min respectively.

3. Battery (1) according to any of claims 1 or 2, **characterized in that** the viscoelastic elastomeric material is a foam having a density comprised between 600 and 800 kg/m³.

4. Battery (1) according to any of the preceding claims, **characterized in that** the viscoelastic elastomeric material is a pressure-sensitive adhesive.

5. Battery (1) according to any of the preceding claims, **characterized in that** the viscoelastic elastomeric material is chosen from the group comprising acrylics, natural rubbers, butyl rubbers, silicone rubbers, ethylene vinyl acetates (EVA), nitriles, styrenic block copolymers (SBC) and vinyl ethers.

6. Battery (1) according to any of the preceding claims, **characterized in that** the cathode (8) and anode (10) current collectors are made of an at least partially amorphous metal material.

7. Battery (1) according to any of the preceding claims, **characterized in that** the electrolyte takes the form of a salt in aqueous solution.

8. Battery (1) according to claim 7, **characterized in that** the cathode (2) and the anode (4) comprise an electroactive material whose potential difference is within the window of water stability.
